# EUROPEAN PATENT SPECIFICATION

(11) **EP 0 172 663 B1**
(45) Date of publication and mention of the grant of the patent: **14.09.1994**
(21) Application number: 85305228.0
(22) Date of filing: 23.07.1985
(51) Int. Cl.: G01N 21/88, B07C 5/34, G01N 21/21, H04N 7/18

(54) **Method and apparatus for inspecting tablets automatically**
Verfahren und Vorrichtung zur automatischen Untersuchung von Tabletten
Méthode et appareil pour l'inspection automatisée de tablettes

(30) Priority: 23.07.1984 JP 152548/84; 13.08.1984 JP 169712/84; 30.08.1984 JP 181257/84; 01.04.1985 JP 69533/85
(43) Date of publication of application: 26.02.1986
(73) Proprietor: MUTUAL CORPORATION, Oyodo-ku Osaka (JP)
(72) Inventor: Miura, Takashi, Ashiya Hyogo (JP)
(74) Representative: Boydell, John Christopher

(56) References cited:
- DE-A- 2 937 335
- GB-A- 2 016 683
- GB-A- 2 041 693
- GB-A- 2 065 874
- GB-A- 2 066 455
- US-A- 3 577 153
- US-A- 3 709 598

## Description

### BACKGROUND OF THE INVENTION

### Field of the invention:

This invention relates to a machine for inspecting automatically at a high speed various tablets, such as uncoated tablets, sugar-coated tablets, film-coated tablets, etc. for defects by comparing the surface, back and side of each tablet with specific setting values. This machine has for its object to detect automatically and optically cracks, chips, blurs, bad markings, etc. of tablets .

Tablets made by a conventional tableting machine are inspected visually in the course of conveyance for cracks, chips, stains, bad markings, etc. However, since men's intuitive judgment varies with the physical condition and the degree of fatigue at the time of inspecting, it is difficult to expect accurate and perfect inspection from them. Moreover, visual inspection is inefficient and involves labor cost. In order to eliminate the disadvantages of the conventional tableting machine, methods of inspecting tablets optically by using TV cameras have been suggested. One of such methods is that when conveying tablets in one or two rows by utilizing a belt conveyor or a adsorption drum, pictures of them in static state are obtained by projecting momentarily on them by a projector, such as a strobo lamp, and judgment is made according to the quantity of light received in a camera. This method raises no problem if tablets are conveyed in one or two rows, but in the case where tablets are conveyed in three or more rows, it is impossible to obtain accurately the static pictures of tablets in each row and therefore proper inspection is rendered impossible. Also, in inspecting the surface, back and side of each tablet, at least three TV cameras must be set at the course of conveyance and accordingly the conveying course must be made longer. Moreover, when two or more strobo lamps irradiate objects of inspection, even if the lamps are apart from each other light enters into the other camera and therefore accurate photographing cannot be effected. In order to avoid such trouble, it is required to make the distance between cameras larger and to make the strobo perfect. Further disadvantage is that since the marker is set at such a position that it irradiates in the vertical return, synchronisation of machine, camera and projection is difficult to obtain.

GB-A-2065874 describes a method of using a TV camera for inspection of objects carried by a conveyor, which objects are illuminated by a stroboscopic light source whose operation is timed so as to be synchronised with the TV camera.

In accordance with a first aspect of the invention, there is provided a machine for inspecting the outer appearance of tablets or the like, said machine comprising feeding means (A, B) to send out said tablets or the like in order, conveying means (C) to convey said tablets or the like for inspection of their outer surface, inspecting means (D), incorporated in said conveying means to inspect photoelectrically the outer surface of said tablets, which utilises a TV camera for taking still pictures of the tablets or the like in conjunction with a strobo lamp which flashes in concert with the conveying of said tablets or the like, and discharging means (E) to take out good articles and defective articles selectively after inspection, said objects being inspected for good or bad on the basis of their shape, marking or printing, etc., said machine being characterised in that said inspecting means (D) comprises an A/D converter connected to said TV camera; a signal dividing means which separates the picture signals taken by the TV camera into a picture signal representing the area of the tablet containing printed information and a picture signal representing the area peripheral to the area of the tablet containing printed information; a first signal classifying means which selectively extracts a signal (Bb) representative of the colour of the tablet to be inspected, a signal (Db) representative of the colour of the printed area of the tablet, and a signal (Eb) obtained by integrating said signal (Db) along each scanning line using an integrator circuit; a second signal classifying means which selectively extracts a signal (Ab) representative of the background colour, a signal (Bb) representative of the colour of the tablet to be inspected, and a signal (Fb) obtained by integrating said signal (Bb) with another integrator circuit; memories which store the signals extracted by the classifying means as standard reference signals of the tablet or the like to be inspected; and a comparator which compares corresponding classified picture signals taken by the TV camera with the previously stored signals in the memories.

In accordance with a second aspect of the invention, there is provided a method of inspecting the outer appearance of tablets or the like, said method comprising: previously taking pictures of a standard tablet or the like by means of a TV camera; converting the picture signals into digital signals by means of an A/D converter; separating said picture signals into a first picture signal representing the area of the tablet containing printed information and a second picture signal representing the area peripheral to the area of the tablet containing the printed information; dividing said first picture signal into a signal (Bb) representative of the colour of the tablet to be inspected, a signal (Db) representative of the colour of the printed area of the tablet, and a signal (Eb) obtained by integrating the signal (Db) along each scanning line by an integrator circuit; simultaneously said second picture signal is divided into a signal (Ab) representative of the background colour, a signal (Bb) representative of the colour of the tablet to be inspected, if required, and a signal (Fb) obtained by integrating said signal (Bb) with an integrator circuit; storing each of the above identified signals as the standard tablet to be inspected; thence taking pictures of the tablets or the like to be inspected by the same TV camera under the same conditions as the standard tablet; and comparing the corresponding signals of each in order to enable a judgment to be made with a predetermined tolerance whether the object is good or bad.

Projection to the TV camera is made by polarised light so as to prevent halation and to ensure accurate photographing.

The nature and advantages of the present invention will become more apparent from the following description made with reference to the accompanying drawings, in which:
Fig. 1 is a rough front view of the inspecting machine according to the present invention;
Fig. 2 is a plan view of the inspecting machine shown in Fig. 1;
Fig. 3 is a rough flow chart of the tablets inspection;
Fig. 4 is a perspective view of the uncoated tablets feeding device;
Fig. 5 is a cross section of the uncoated tablets feeding device shown in Fig. 4;
Fig. 6A, Fig. 6B and Fig. 6C show respectively a cross section of the coated tables feeding device;
Fig. 7A and Fig. 7B show respectively a front view, partly broken away, of a conveying device for inspection;
Fig. 8A, Fig. 8B and Fig. 8C are respectively an explanatory drawing of the conveying device shown in Fig. 7A and Fig. 7B;
Fig. 9 is an explanatory drawing of a taking-out means;
Fig. 10 is a cross section of the taking-out means shown in Fig. 9;
Fig. 11 is an explanatory drawing of a means of sorting bad articles from good articles and articles for re-inspection;
Fig. 12 is an explanatory drawing of static images of tablets to be stored in a TV camera;
Fig. 13A, Fig. 13B and Fig. 13C show respectively a timing chart indicating the relation among the tablet position signal, the strobo flash and scanning;
Fig. 14 is an explanatory drawing showing photographing;
Fig. 15 is an explanatory drawing of how to take photograph;
Fig. 16A, Fig. 16B and Fig. 16C show respectively how light is projected from one direction;
Fig. 17A, Fig. 17B, Fig. 17C, Fig. 18A and Fig. 18B show respectively how light is projected from two directions;
Fig. 19A and Fig. 19B show respectively how light is projected from four sides;
Fig. 20 is an explanatory drawing showing how to photograph by irradiation of light of different wave length;
Fig. 21 is a graph showing the relation between flashing and scanning at each face in the case where the surface and the back of a tablet is inspected;
Fig. 22 is a block diagram showing the inspection method by the so-called mask method whereby the contour of an object of inspection is measured and a measuring range which is slightly smaller in diameter than the measured contour is determined for comparison with setting values;
Fig. 23 is an explanatory drawing of how to determine the measuring range in Fig. 22;
Fig. 24 is an explanatory drawing of overlapping of a picture of a standard object and a picture of an object of inspection;
Fig. 25 is a rough explanatory drawing of a real time treatment;
Fig. 26 is a block diagram showing the inspecting method for judging the good or the bad of tablets;
Fig. 27 is an explanatory drawing showing the principle of a shift circuit; and
Fig. 28 is a block diagram of the shift circuit.

### DETAILED DESCRIPTION OF THE INVENTION

The present invention has for an object to carry out inspection of tablets or the like accurately at a high speed by arranging such objects in plural rows and by conveying them at the regular pitch on a comparatively short conveying course while inspecting the surface, the back and the outer peripheral surface of them accurately at a high speed. The inspecting machine according to the present invention comprises a feeding device for sending out tablets to be inspected, a conveying means for conveying tablets for inspection, an inspecting means and a sending-out means after inspection. The construction, action and effect of this inspecting machine is described below with reference to embodiments shown in the drawings.

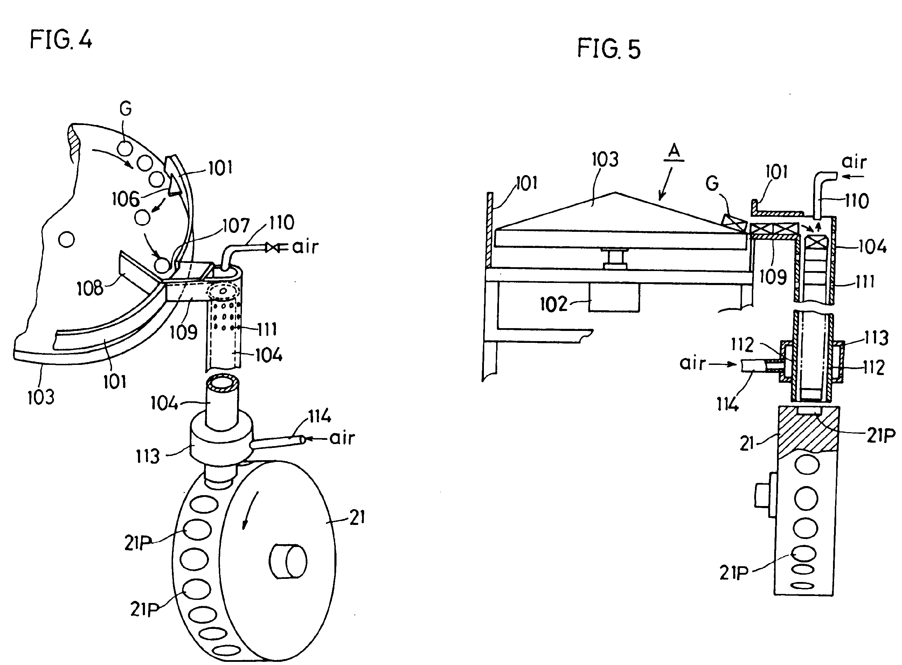

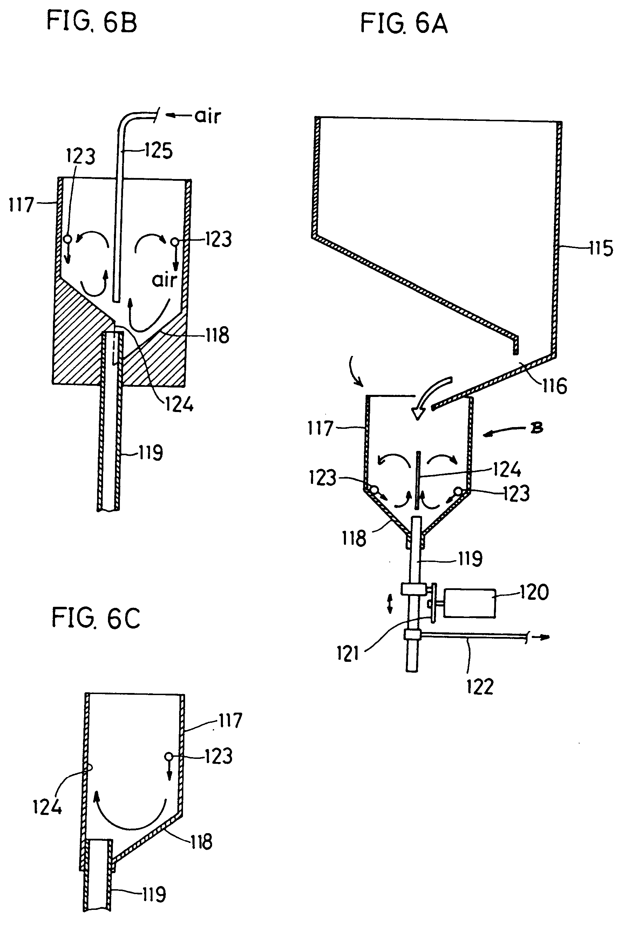

In general, uncoated tablets and sugar-coated tablets are produced on continuous basis and in large quantities by a tableting machine. These tablets are fed into a storage tank or a hopper of an inspecting machine, from which they are sent out in a row to the side of an inspecting means by a sending-out means. This sending-out means is a feeding device A shown in Fig. 4 and Fig. 5 in the case of uncoated tablets with a comparatively rough surface and a feeding device B shown in Fig. 6A to 6C in the case of sugar-coated tablets with a smooth surface. The feeding device A is described below with reference to Fig. 4 and Fig. 5.

A rotating disc 103 of conical shape having the required diameter and the angle of inclination of conical cone corresponding to the frictional angle determined by a tablet and the quality of the rotating disc is driven by a driving device 102 provided below. A fixed guide 101 is provided along the outer peripheral surface of the rotating disc 103. The fixed guide 101 and the rotating disc 103 are kept from touching each other but a gap between them is made as small as possible so that small pieces do not get in between them. At least one notch is made in the fixed guide 101 to make it an outlet 107. The size, shape, etc. of this outlet are so determined that tablets are taken out in order.

The fixed guide 101 is equipped with a pressure dispersion plate 106 and an introduction guide 108 for shifting the course. The angle of the pressure dispersion plate 106 in relation to the fixed guide 101 is made nearly the same as the angle of inclination of the rotating disc 103 and the protruding quantity (length) of the pressure dispersion plate 106 is determined within the range from one-third of the diameter of a tablet G to the diameter of the tablet G and is provided at the position ahead of the outlet 107. The projecting angle of the pressure dispersion plate 106 should preferably be within the range from 15° to 20°. If it is more than 20°, the position of the outlet should be shifted further in the running direction of the rotating disc but if it is less than 10°, pressure dispersion is rendered difficult.

An introduction guide 108 is provided adjacent the outlet 107 and its fitting angle should preferably be 15 - 20°. If the fitting angle is less than 10°, discharging force becomes so weak that discharging of tablets is rendered impossible. On the contrary, if the fitting angle is more than 25°, the diameter of the outlet must be made larger. The protruding quantity (length) of this introduction guide 108 should be within the range from one-third of the diameter of an object of inspection to the diameter of the object of inspection. From our experience, it is recommended to make the distance between the pressure dispersion plate and the outlet about 40mm in the case where uncoated tablets are inspected and the angle of inclination of the conical cone of the rotating disc made of resin is 20°. However, this distance should be determined properly according to circumstances.

When tablets are fed on the rotating disc 108 having the frictional angle with tablets and the rotating disc is turned, tablets on the rotating disc are spread toward the circumferential part of the rotating disc owing to the centrifugal force of the rotating disc and the action of the circular cone (inclination) and are conveyed by the rotation of the rotary disc in a row along the inner circumferential surface of the fixed guide 101. Tablets which collided with the pressure dispersion plate 106 are directed to the upper central part of the rotating disc by centrifugal force but come down by their own weight, describing a parabolic falling orbit and are put in the outlet 107. Thus, tablets are taken out of the rotating disc one by one. Even if tablets which collided with the pressure dispersion plate and lifted toward the upper central part of the rotating disc were put in upright state, they are thrown down sideways when falling down.

By making the speed of revolution of the rotating disc faster than the taking-out speed, surplus tablets which are not taken out are arranged in two or more rows on the rotating disc and advance as they are describing a parabola, free from formation of bridge.

A feed tube 104 is provided at the outside of the outlet 107 of the fixed guide 101. Tablets which collided with the introduction guide 108 are sent out through the outlet 107 and are introduced into the feed tube 104 via a trough 109. The feed tube 104 is open at its upper part and a pressure air blowoff pipe 110 is provided above the feed tube and tablets which are introduced into the feed tube from the rotating disc via the introduction guide 108 and the trough 109 are forced down by compressed air applied thereto from above. This means that the falling down speed of a tablet is accelerated by the addition of compressed air pressure to the falling force by tablet's own weight. Sucking force in horizontal direction acts on the head tablet at the introduction guide 108, namely, the introduction guide part becomes negative pressure due to ejector effect when compressed air is jetted by the compressed air blowoff pipe 110 and this causes sucking force in horizontal direction which applies accelerating force in horizontal direction to tablets. Therefore, it is possible to convey tablets at a high speed while effecting the change of direction from horizontal direction to the vertical direction.

Compressed air jetted from the compressed air blowoff pipe 110 after pressding down the surface of a tablet, is exhausted outside from the upper opening and perforations 111 made at the side of the feed tube 104.

Small holes or air jet holes 112 are made at the central part or at the lower part (as shown in Fig. 5) of the feed tube 104 and an air feed box 113 is fixed to the outer surface of the feed tube 104 so as to feed compressed air through the holes 112. An air feed pipe 114 is connected to the air feed box 113 to supply compressed air to the latter. The lower end of the feed tube 104 is open and is opposed to a feed drum 21 having many pockets at a regular pitch and each pocket is so shaped that one tablet is fitted in it. The feed drum 21 is rotated at a constant speed or at variable speeds so that tablets are supplied to the pockets continuously from the feed tube 104.

In this embodiment, by the synergy of the compressed air blowoff pipe 110 and the air jet holes 112 made at the lower part of the feed tube 104 tablets are caused to fall down at a high speed in the feed tube 104 but in some cases, the compressed air blowoff pipe can be dispensed with.

A feeding device B suitable for feeding sugar-coated tablets is shown in Fig. 6A, Fig. 6B and Fig. 6C. This feeding device is provided below a hopper 115 (the rotating disc 103 of the feeding device A is also provided below the hopper 15). A secondary storage tank 117 which is open at its upper part is provided below a discharge port 116 of the hopper 115. This secondary storage tank 117 is- sloped at its bottom part 118 as illustrated and a feed pipe 119 is inserted in the lowermost part of the bottom 118. This feed pipe 119 is connected to a cam 121 which is driven by a driver 120 so that it moves vertically. A vacuum pipe 122 is connected to the feed pipe 119 so that the inside of the feed pipe is made negative pressure and tablets are introduced smoothly into the feed pipe 119 from the secondary storage tank.

An apparatus to jet pressure fluid (compressed air, for example) or a nozzle 123, for example, is provided in the secondary storage tank 117. This nozzle 123 is located near the feed pipe 119 in such a fashion that its pressure jetting direction is in line with the sloped bottom surface 118 of the storage tank. An apparatus to raise jetted pressure fluid or a vertical wall 124, for example, is provided in the storage tank 117. As shown in Fig. 6A, this vertical wall is provided at the center of the storage tank and one nozzle 123 is arranged at either side of the vertical wall. Alternatively, the same action and effect can be obtained by shaping the sloped bottom 118 as shown in Fig. 6B, by forming the vertical wall 124 between the both sloped bottom surfaces and by providing the vertically movable feed tube 119 there. The storage tank shown in Fig. 6C has a sloped bottom only on one side and the inner surface of the other side wall 124 is utilized as a vertical wall.

The treatment at a still higher speed can be realized by providing a compressed air pipe 125 right above the center of the feed tube 119 and by jetting compressed air from the pipe 125 toward the feed tube 19.

Tablets put in the hopper 115 are fed into the secondary tank 117 via the discharge port 116 and the upper opening of the storage tank. At this time, due to the weight of tablets themselves, sliding resistance and other factors, the tablet supply surface of the secondary storage tank is controlled automatically and only the quantity of tablets discharged from the secondary storage tank is replenished automatically from the hopper. Tablets in the secondary storage tank are formed into a dome-like layer at the lower part of the storage tank due to pressure fluid (compressed air) jetted from the nozzle 123 and other factors and flow down gradually from the lower part of the dome-like layer along the airflow from the nozzle. In the dome-like layer, tablets are imparted with gyratory movement in the fixed direction or the movement in the arrow direction shown in Figs. 6A, 6B and 6C and with the rising and falling of the feed tube 119 by the movement of the driver 120, tablets are naturally put in order in the direction and are introduced into the feed tube 119 in a row. At this time, by flowing down movement in the fixed direction of pressure fluid (compressed air), bridging phenomenon of tablets can be prevented. By connecting the vacuum pipe 122 to the feed tube 119, tablets can be introduced smoothly at a high speed into the feed tube 119.

The feed tube 119 should be formed in comformity with the shape of tablets. This embodiment was explained with reference to tablets but is applicable to capsules and granules.

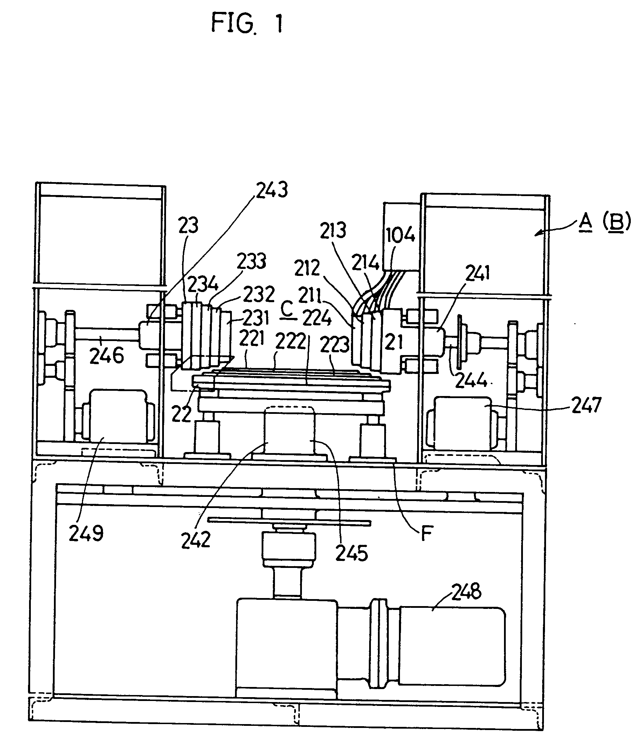

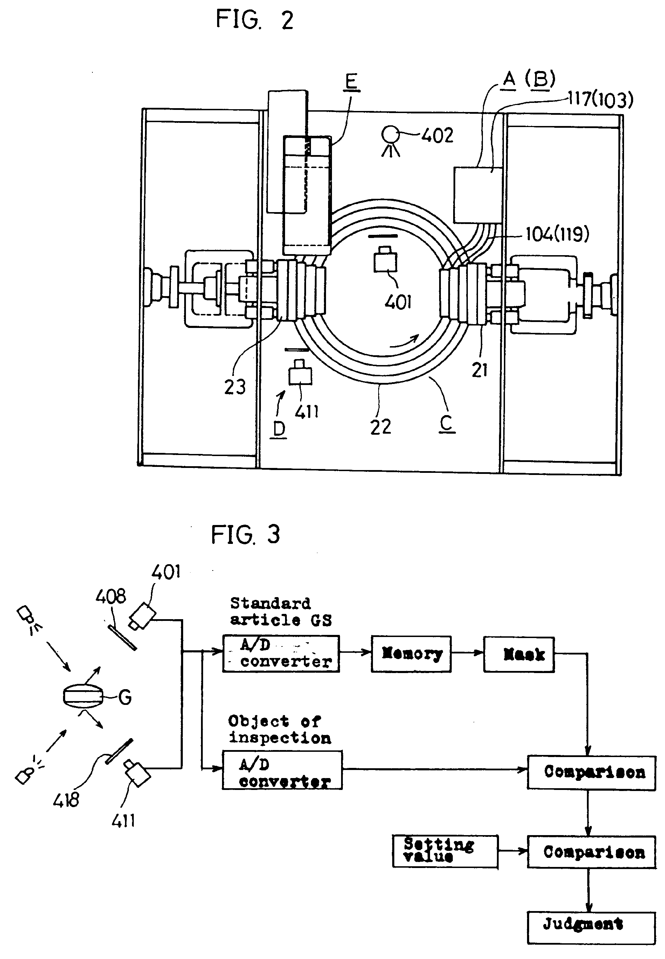

The feed tube 119 is open at its lower end and is opposed to the feed drum. Therefore, tablets falling down in the feed tube are fitted in each pocket of the feed drum. Tablets sent out into the feeding device A or B one by one are fed to a conveying means C to be inspected. As shown in detail in Fig. 1, Fig. 2, Fig. 7, etc., this conveying means comprises three drums in tiers, namely, a feed drum 21, an adsorption drum 22 for inspecting the surface and an adsorption drum 23 for inspecting the back which are opposed to each other. These drums 21, 22, 23 are in disc-shape of the same diameter or different diameters and have at their outer circumference circumferential surfaces of concentricity and different diameters in tiers, namely, circumferential surfaces 211, 212, 213, 214 for the feed drum 21, circumferential surfaces 221, 222, 223, 224 for the adsorption drum 22 and circumferential surfaces 231, 232, 233, 234 for the adsorption drum 23. These circumferential surfaces have the width on which objects of inspection , such as tablets, capsules, etc. can be supported. In this embodiment, each drum has four tiers and can convey tablets in four rows but the number of rows can be varied by varying the number of tiers.

These three drums are arranged in such a fashion that circumferential surfaces of each tier of each drum are opposed to each other, more particularly, the adsorption drum 22 for inspecting the surface is arranged horizontally but the feed drum 21 and the adsorption drum 23 for inspecting the back are arranged vertically in such a fashion that the first drum and the second drum, and, the second drum and the third drum, are opposed to each other at the circumferential surface of concentricity and different diameters and top surface of the tier. The gap between drums is so determined that objects of inspection can be transferred from one drum to another.

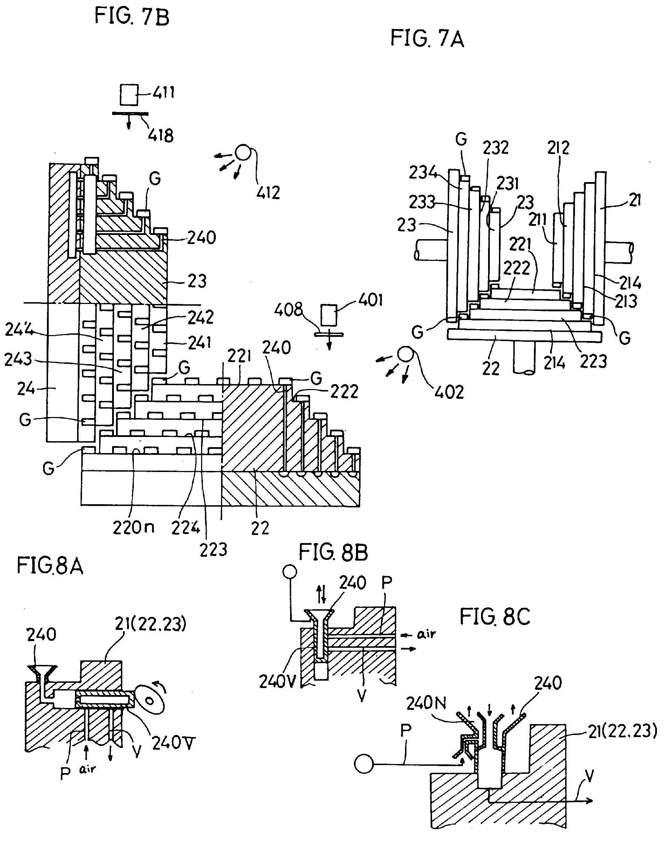

Preferably, the circumferential speed of each drum should be the same. In order to prevent objects of inspection (tablets) from springing out of the circumferential surface and the top surface of a rotating drum many suction holes 240 are made at the circumferential surface and the top surface of the drum. Each suction hole 240 is connected to a source of vacuum or negative pressure or to a source of compressed air so that objects of inspection are attracted by these holes. The means of attracting (adsorbing) tablets to the circumferential surface and the top surface of the drum is similar to the conventional means but an example of such means is shown in Figs. 8A, 8B and 8C. In these figures, the suction hole 240 made in the circumferential surface or the top surface of a drum is connected selectively either to a common vacuum route V or to a common compressed air route P (both provided in the drum) through the medium of a valve 240V. The valve 240V shown in Fig. 8A is of such system that a valve which is slidable between the both routes is worked by a switching means, such as a cam, a solenoid, etc. The 240V shown in Fig. 8B is of such system that a valve formed integrally with the suction hole is slid. The valve 240V shown in Fig. 8C is of such system that a fine nozzle 240N connected to the compressed air route is provided in the suction hole 240 connecting to the vacuum route and only when compressed air is jetted, air is jetted from this nozzle to release vacuum adsorption. It is desirable to make the suction hole taper so that it can adsorb the center of a tablet accurately.

The three drums 21, 22, 23 are arranged above the frame F of an inspecting machine. These drums support rotatably drum shafts 244, 245, 246 by bearings 241, 242, 243 provided at the frame, and make the driving source 247, 248, 249 drive the drum shafts so as to equalize the circumferential speed (namely, the running speed of a pitch between suction holes made at the surface of each drum) of each drum can be carried out by using gears or electrically.

An inspecting means D is provided for inspecting optically tablets or the like which are being conveyed on the running drum for soil, cracks, chips, bad printing, bad marking, etc. This inspecting means mainly comprises strobo lamps and TV cameras (or sensers). Two TV cameras are set for inspecting the whole outer periphery, the surface and the back of objects of inspection, one of which is set at the position opposing the outer peripheral surface of the second drum 22 for inspecting the surface and the outer peripheral surface of a tablet and the other is set above the top surface of a tier of the third drum for inspecting the back and the outer peripheral surface of a tablet. By these two cameras the whole outer peripheral surface, the surface and the back of an object of inspection are inspected, but inspection of all outer surface of an object of inspection can be done by the combination of one TV camera with mirrors, prisms and optical fiber.

In conveying tablets by the conveying means C, the feed tube 104 or the feed tube 119 of the feeding device A or B respectively is so arranged that its lower opening is opposed to suction holes on the feed drum of the conveying means. At this time, the number of feed tubes should correspond to the number of tiers of the feed drum, namely, the number of rows of tablets to be fed. When tablets are fed one by one at a regular pitch on the circumferential surface of each tier of the first drum 21 from the feed tube, tablets are attracted to suction holes 240 by vacuum and are conveyed by the rotation of the drum 21 and when they reach the position where they touch the second drum 22, vacuum of suction holes at the position where the first drum 21 makes contact with the second drum 22 is released or on the contrary, compressed air is jetted so as to release adsorption of tablets by the first drum 21. Thus, tablets are attracted by and transferred to the second drum 22. When tablets are adsorbed by the second drum 22 and conveyed by the same drum, the first TV camera inspects the surface and the outer peripheral surface at least by 180° and when tablets are attracted by and transferred to the third drum, they are turned upside down so that the back and the outer peripheral surface (of the remaining 180°) are inspected by the 2nd TV camera.

When the tablets which were adsorbed to suction holes 240 of the second drum 22 reach the position where they contact the third drum 23, adsorption by the second drum is released so that the tablets are attracted by and transferred to the third drum. The tablets are then released from adsorption and are discharged at the specific position of the third drum.

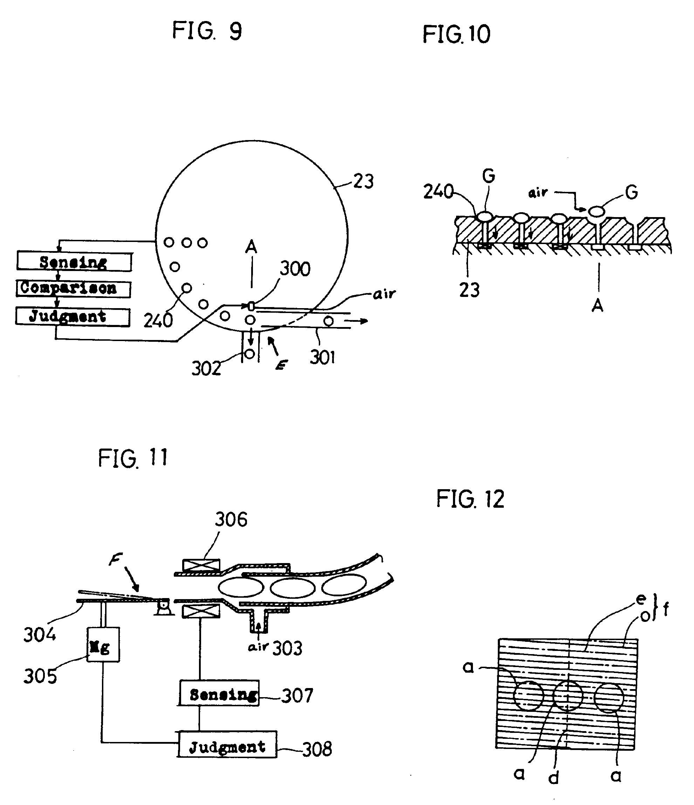

Inspection is made when tablets are attracted by suction holes 240 of the third drum 23 and are conveyed by the same drum. After this inspection, adsorption of tablets by the third drum is released and tablets are discharged as they are sorted into the good and the bad. This discharging means E is shown in Fig. 9 and Fig. 10. Tablets are fitted in each suction hole 240 of the third drum in such stabilized state that they are not sprung out by rotation vibration and centrifugal force of the drum and that they are adsorbed by vacuum pressure. When the tablets reach the taking-out position or the discharging position, vacuum adsorption by suction holes of the drum is released. This release is done by cutting off the connection to a vacuum source by means of a valve or by making the vacuum route of the suction hole 240 communicate with the atmosphere or by other proper means. When vacuum is released, tablets are put in such state that they lift slightly from suction holes assume a stabilized posture for a little while but are soon changed to an unstable posture. While tablets lift or separate from suction holes in stabilized state, they are discharged by the operation of a switching means 300. An order to this switching means is given on the basis of a detection signal from a detector which detected one or more of the weight, length and shape of a tablet and the judgment from comparison with setting value signals inputted beforehand. The switching means 300 comprises an air nozzle provided adjacent the third drum 23. Good objects which have come up to the specific standard are discharged onto a good objects taking-out chute 301 by centrifugal force of the drum 23 or by pressure, but off-grade objects are taken out into a bad objects taking-out chute 302 by compressed air which is jetted from the nozzle 300 only when a signal was received from the judging circuit. The nozzle as a switching means is provided opposite the bad objects taking-out chute 302.

Tablets passing through the bad objects taking-out chute 302 comprise those which have been judged definitely as inferior goods and those which are difficult to judge. In order to sort the former from the latter, a sorting means F as shown in Fig. 11 is provided in the chute for re-inspecting tablets which have not been judged definitely as inferior goods. This sorting means F is composed of an air nozzle 303 or the combination of the air nozzle and a chute 304 which rises and falls by a magnet 305. This sorting means is worked by signals from an inspecting means (to be explained later). Alternatively, tablets are detected by a detector 306 provided close to the outlet of the bad objects taking-out chute 302 and detection signals work the magnet 305 via a sensing circuit 307 which senses definite inferior goods and indefinite inferior goods and a judging circuit 308.

Explanation is made below about an inspecting means which inspects accurately at a high speed tablets being conveyed on a short course by the conveying means C for cracks, chips, stain, bad marking, bad printing, etc. at the surface, back and outer peripheral surface.

The inspecting means comprises a set of the first TV camera 401 and a momentary projector 402 (hereinafter referred to as "strobo") for inspecting the surface and at least one half of the outer peripheral surface of tablets which are adsorbed by suction holes 240 of the second adsorption drum 22 for inspecting the surface and the back and are conveyed by the rotation of said drum and a set of the second TV camera 411 and a strobo 412 for inspecting the back and at least the remaining half of the outer peripheral surface of tablets which are adsorbed by suction holes of the third adsorption drum 23 for inspecting the back and are conveyed by the rotation of said drum. TV cameras 401, 411 are cameras comprising the fixed pickup elements of CCD system (R.G.B. three-sheet system) or cameras of similar nature. Tablets flashed by the strovo are photographed by the TV camera and taking out of video signals is carried out, namely, when tablets which are objects of inspection reached the position where photographing by a TV camera is possible, they are sensed by position detecting means 403, and the strobo 402, 412 flashes, whereby static pictures of tablets in the photographing position are obtained. When tablets being conveyed by rotation of the second adsorption drum 22 reached the photographing position of the first TV camera 401, the strobo 402 is caused to flash by the position detecting means and flashes on tablets. Thus, static images of tablets are stored by the TV camera 401, as shown in Fig. 12.

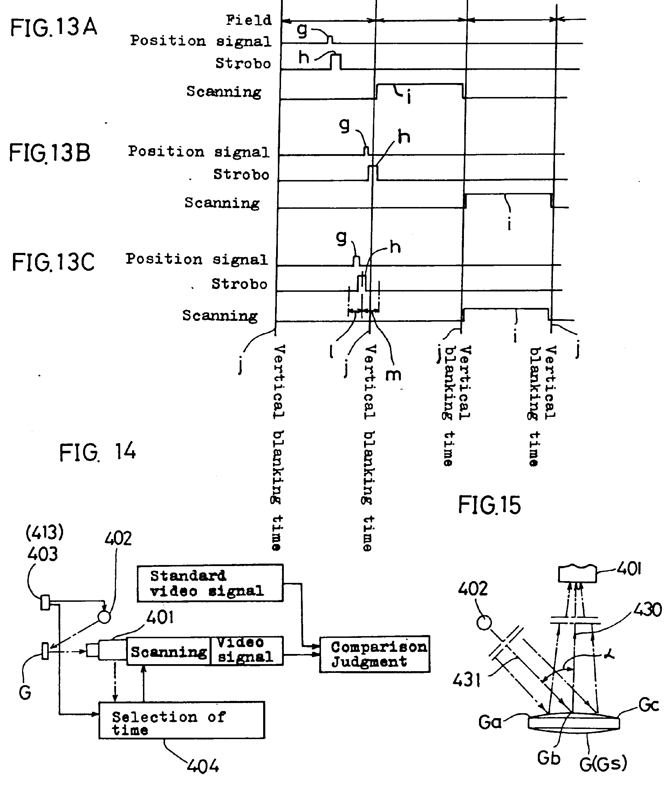

In the case of the camera 401, a picture is formed by horizontal scanning lines. The horizontal scanning forms one frame f by an odd field o and an even field e and goes back upward by the flyback line d from the lower terminal end of the odd field o and starts the even field e. This scanning is repeated. If light is flashed when a signal of vertical flyback line formation was given and scanning is started, errors are caused by the influence of the vertical blanking period (usually, 1250 - 1400 µs). Therefore, a scanning time selecting means 404 is provided for the TV camera so as to issue an order to start scanning some time after strobo flashing to avoid the vertical flyback line. The main point of this is shown in Fig. 13. In Fig. 13, g is an operation signal from a position detecting means 403, h is the strobo flashing time and i is the scanning operation period. Fig. 13A shows the case where the strobo flashing time h is in the field o or the field e. Fig. 13B shows the case where strobo flashing is done, overlapping the vertical flyback signal (hereinafter referred to as "vertical signal"). In either case, scanning is done in the field next to the field where strobo flashed. Fig. 13C shows the case where adjustment errors of the strobo flashing time and the vertical signal time are taken into consideration. Setting ranges ℓ, m are provided before and after the strovo flashing time h and if the vertical signal j overlaps such ranges, scanning is started at the next vertical signal.

The foregoing explanation is made about the method of inspecting the surface of a tablet G adsorbed by the second adsorption drum 22 but at the same time, at least one half of the outer peripheral surface of the tablet G is inspected by the first TV camera. The outer peripheral surface of a tablet which is in the photographing position is reflected in a mirror (not shown in the drawing) by the strobo flashing and is further reflected in the TV camera via a plurality of mirrors and prisms (not shown in the drawing). If the surface of an object of inspection is lustrous, halation takes place at the time of strobo flashing and photographing is rendered impossible. In order to avoid this trouble, a polarized filter 408, 418 is interposed between tablets and a source of light and/or between tablets and the TV camera.

In detecting unevenness at the surface of a tablet by the TV camera 401, the TV camera 401 is arranged at the required angle of inclination in relation to the photographing center line connecting the TV camera and the surface to be measured and light is flashed on the surface to be measured from an oblique direction. By flashing on the surface to be measured of a tablet by the strobo from an oblique direction, the shade is made at uneven parts of the surface to be measured or reflected light to the TV camera varies and existence of unevenness can be detected by such shade or variation of reflected light. In this case, if the surface to be measured is flashed by a plurality of strobos from different oblique directions, more accurate detection can be realized.

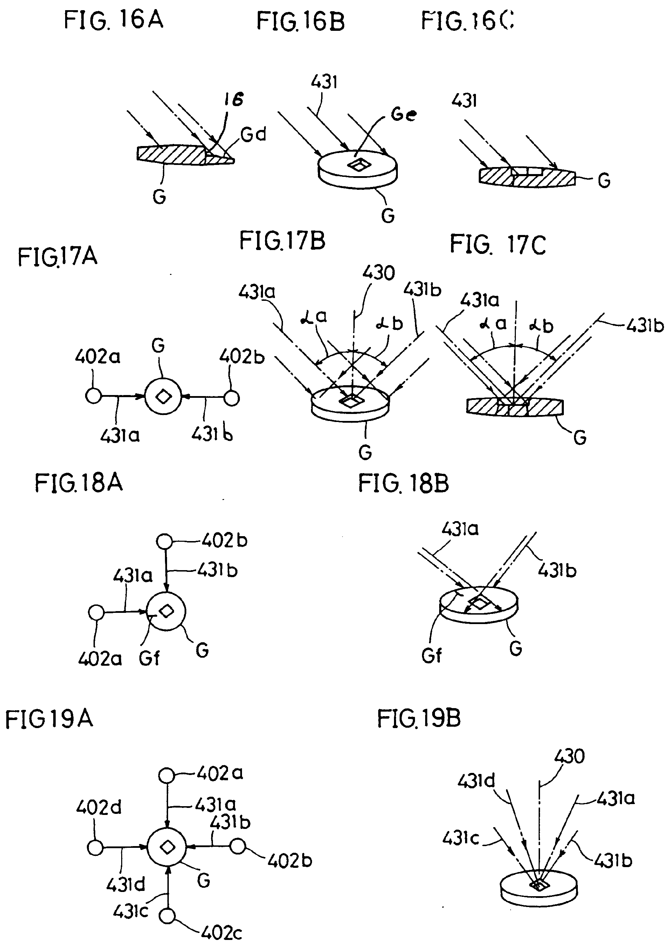

Fig. 15 is a basic explanatory drawing of flashing from an oblique direction. In Fig. 15, numeral 430 denotes a photographing center line connecting the surface to be measured of a tablet G and the TV camera 401. A flashing center line 431 connecting the strobo 402 and the central part Gb of the surface to be measured has the required angle of inclination in relation to the photographing center line 430. This angle α should be determined properly according to the coarseness of the surface to be measured, shape of unevenness, etc. For example, in the case of spherical surface as illustrated, the angle of inclination is made 45° or more so that there is caused the difference between the reflected light to the TV camera at the arcuate surface Ga - Gb opposing the strobo 402 and the reflected light from the arcuate surface Gb - Gc on the other side. By varying the quantity of reflected light at each part of the surface to be measured to the TV camera, the shape of arcuate surface can be measured accurately. Fig. 16A shows the measuring of a tablet having a chip Gd.

Fig. 16B shows a state where a mark Ge is stamped and the tablet is ready to be measured. In this case, a shaded portion is formed on one side of the mark Ge, so that by memorizing the shade density, size, shape, etc. of the shaded portion, acceptability or not of the tablet can be judged by comparison.

Fig. 17A shows a construction comprising a TV camera 401 with stroboscopic flashlight units 402a and 402b held therebetween on the right and left (or front and rear) sides respectively, with their respective projection center lines 431a, 431b inclined by the inclinations angles αa and αb respectively to the photographing center line 430. In this case, one of the light sources, e.g., the stroboscopic flashlight unit 402b, is made to have the weaker luminocity than the other light source 402a. According to this method, as shown in Fig. 17C, there are formed the dark and light shaded portions on both sides of the mark, and the mark can be more clearly detected.

Fig. 18A, 18B shows an embodiment where the two stroboscopic flashlight units are arranged at right angles to each other. In this case, each centerline of projection shall have the specified angle of inclination to the photographing center line, as in the foregoing embodiments. In this embodiment as well, one of the light sources should preferably have stronger or weaker luminosity than the other.

According to this method, when there is a flaw Gf in parallel with the direction of projection from one light source, a shadow is formed by the projection from the other light source, so that the flaw Gf can be readily discovered.

Fig. 19A, 19B, shows an embodiment where the light sources are arranged on four sides of the tablet, with their respective projection center lines disposed with the specified angle of inclination to the photographing center line, as in the foregoing embodiments. In this case as well, it is preferable for the respective light sources to be provided with different luminosities.

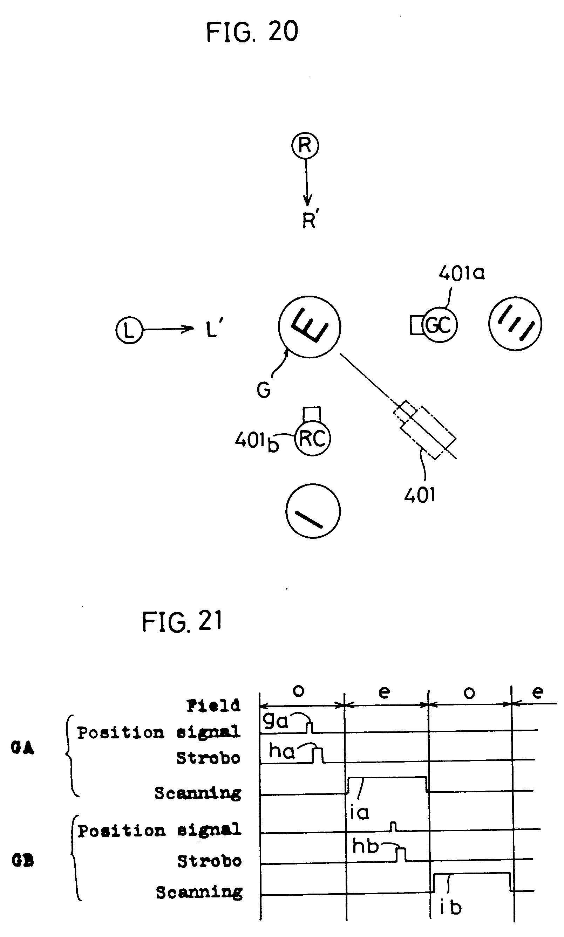

According to this embodiment, due to the projection on the surface to be measured from multi-directions, a further effective detection of flaws can be expected. Further, as a method of inspecting surface uneveness, it may be so arranged that the rays of different wavelengths are projected onto the surface of the subjective article, these rays are photographed by a light reception means designed to receive the wavelength corresponding to each projected wavelength, and only the portions involved in variation of luminosity on the shadow portion which does not let through the projected ray are synthesized, by which judgment is made on the acceptability of the images of the uneven portions on the surface of an article. To explain this method in more detail, as shown in Fig. 20, a light having a certain wavelength L′ is projected from a certain direction onto the tablet, and a shadow formed by this projection is caused to receive with a television camera 401a. Also, from a different direction, e.g., from a position deviated by 90 degrees, another light having a certain wavelength R′ is projected, and a shadow formed by it is caused to receive with a TV camera 401b. Even if the rays having the same wavelength are projected respectively from the directions G and R, no shadow is formed, but, when the wavelengths of the rays projected from G and R directions are different, shadows corresponding to the respective wavelengths are to be formed. Assuming in this case that a letter "E" is stamped on the surface of the tablet, in the light receiving portion of the TV camera which is designed to sensitize only the wavelength L′ of the light projected from the direction L, only the mark "III" is generated as a shadow of the stamped letter. Also, against the projected light of the wavelength R′ from the direction R, a shadow "I" is generated. When these two shadows of "III" and "I" are synthetized in binary processing, the shadows are clearly displayed as "E". Its area is previously determined, and said area is compared with the subsequently formed synthetic shadow to judge, by which the acceptability or not can be determined. Accordingly, even if the direction of the article varies, when the shadows formed thereby are synthetized, the mark "E" is formed in a modified direction, thus allowing to make an accurate judgment in the same manner. With regard to the directions of projecting the rays which have a certain wavelength according to the direction with differentiated wavelength by direction, explanations have been made on the two directions in the foregoing embodiments, but these directions may be three, four, five, or more.

After inspecting the surface of the tablet and at least half the outer peripheral side thereof, the tablet is transferred to the third adsorption drum 23. At this time, the tablet to be adsorbed by the third drum is placed upside down, i.e., the opposite side to the surface adsorbed by the second drum, or the reverse side, faces up. Under such a state, inspection is effected with the stroboscopic unit 412 and the TV camera 411 in the same manner as aforedescribed. As the inspection method with the television camera 411 is similar to that with the television camera 401, its explanation is omitted. However, scanning is made from the termination of the vertical signal next to the flashing of the stroboscopic flashlight. In this case, practice is made by delaying the photographing time, i.e., the stroboscopic flashing time, by one field. The procedures thereof are shown in Fig. 21, wherein GA shows the operating period of the above on the side of the camera for surface inspection, GB the side of the camera for reverse surface inspection, and the suffix a the surface inspection side, and the suffix b the reverse surface inspection side, respectively.

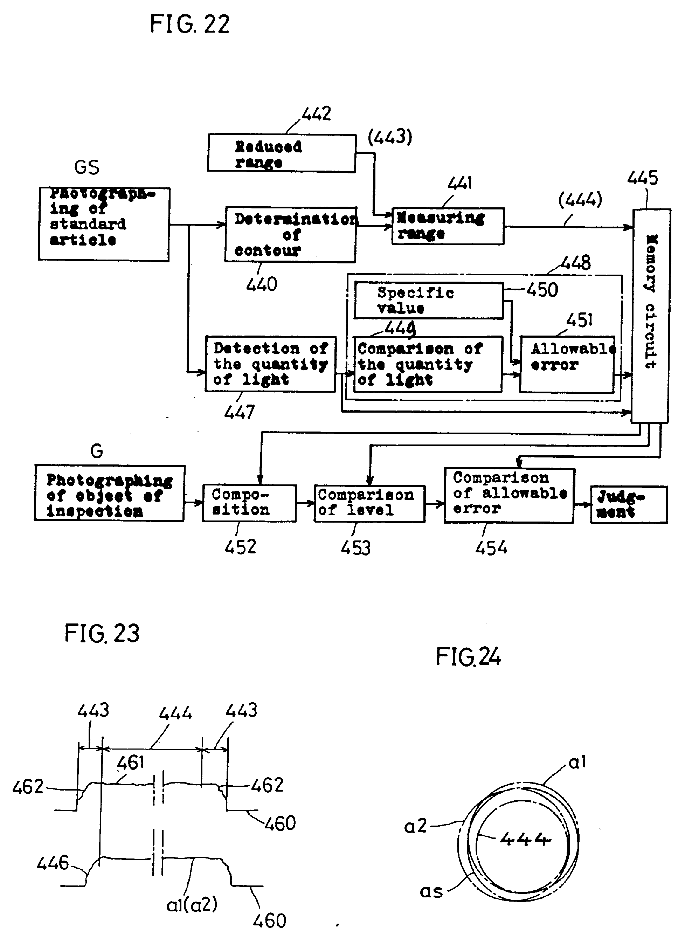

Then, explanation will be made referring to Fig. 22 about the method of scanning the photographed image of the tablet, taking it out as an image signal, and make comparative judgment with the standard image signal by the use of the TV cameras 401 and 411. Firstly, a tablet GS which should become the standard article is photographed with the TV cameras 401 and 411 as above. The photographed image signal is subjected to A/D conversion, which is memorized in the profile determination circuit 440. A single line image signal of a solid photographed image element (hereinafter referred to as picture element) crossing the standard article Gs is shown in Fig. 23, wherein the numeral 460 denotes a base voltage, 461 an image voltage, and 462 the noise formed at both ends of the image.

Then, the image signal is applied to the measuring range determination circuit 441. This measuring range determination circuit is furnished with a reduced range direction circuit 442. By the direction for deletion from said direction circuit 442, the designated deletion distance 443 is deleted from the end of the image, and the reduced measuring range (hereinafter referred to as mask) is determined. This mask 444 is memorized in the memory circuit 445. The above deletion distance is determined on the basis of the side of dislocation of the image obtained by photographing the tablet G from the image of the standard article Gs on laying them together. This dislocation size is mainly attributed to the difference of sizes between the adsorbing holes 204 of the aforedescribed adsorption drums 22 and 23 and the tablet G, and the dislocation size can be measured in advance. Fig. 23 shows the procedures for determining the deletion distance 443. The deletion distance is determined so that the noise 446 of the tablet G does not give effect upon the mask 444. The numeral a1(a2) denotes an image voltage of the article to be inspected. Simultaneously, each position of the image signal of the standard article Gs, more concretely the image voltage 461 of each picture element, is detected in the luminosity detection circuit 447, and memorized in the memory circuit 445 together with the picture element address, and further applied to the judged allowance determination circuit 448. In this judged allowance determination circuit 448, the allowance is determined on the basis of the ordinary allowance for production, preferably in consideration of the tablet G at the time of the above measurement. That is to say, when the surface of the tablet G is flat and smooth and not stamped, and when there is no appreciable variation in the reflective luminosity in a small dislocation range, only the allowance which is considered necessary in an ordinary manufacture may be set, but when the surface is provided with a mark or a print, the sensitivity is affected by dislocation. Accordingly, the maximum value and the minimum value of the luminosity within the range where dislocation is caused to each picture element (or a group of picture elements in the required range) in the adjacent luminosity comparison circuit 449 are measured to determine the range of error for said picture element (or a group of picture elements) against the dislocation. This range of error is laid together with the directions from the specified value adding circuit 450 such as the allowance necessitated for manufacturing in the error determination circuit 451 to determine a tolerable error range, which is applied to the memory circuit 445 to memorize.

Then, in measuring the tablet to be inspected, said tablet is photographed with a TV camera 401 on the same conditions as applied to the above standard article Gs. In this case, as described above, some disagreements are produced between the image of the standard article Gs and the image of the tablet as an article to be inspected. The condition is shown in Fig. 24, wherein "aS" shows an image of the standard article, "a1" an image of the article to be inspected which has been dislocated upward, and a2 an image which has been dislocated in transverse direction. By suitably selecting the deletion distance 443 as mentioned above, the mask 444 agrees with the laid portions of the images as, a1, and a2, respectively. Firstly, in the laying circuit 452, the mask 444 is laid on the image of the article to be inspected, the image signal value of each picture element in the mask 444 is applied to the level comparison circuit 453, wherein input value is compared with the image signal value of the standard article against said picture element, and said level difference is applied to the allowance comparison circuit 454 to detect as to whether the value is within the allowance or not so as to judge the acceptability or not.

In making comparison between the image signal of the tablet as an object to be inspected which has been subjected to A/D conversion and the image signal of the standard article Gs which has been subjected to A/D conversion, masked, and memorized in the memory circuit by synchronously taking out, comparison is made in real time.

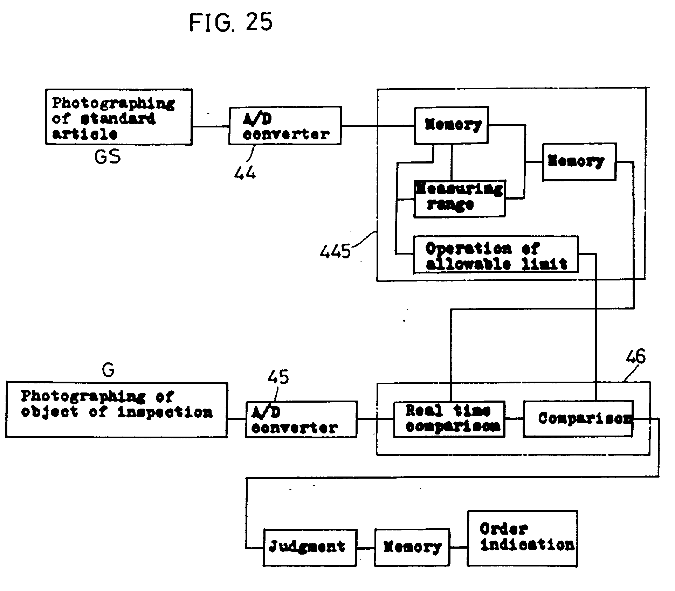

This is made in such procedures that the image signal of the standard article Gs is subjected to A/D conversion 44, inputted to the memory circuit 445, and is inputted together with the signal obtained from the object to be inspected after A/D conversion 45 into the comparison circuit 46, and they are compared in real time by the real time comparison circuit in said circuit. An outline of this sequence is shown in Fig. 25. Owing to the real time comparison, a high speed comparison can be made.

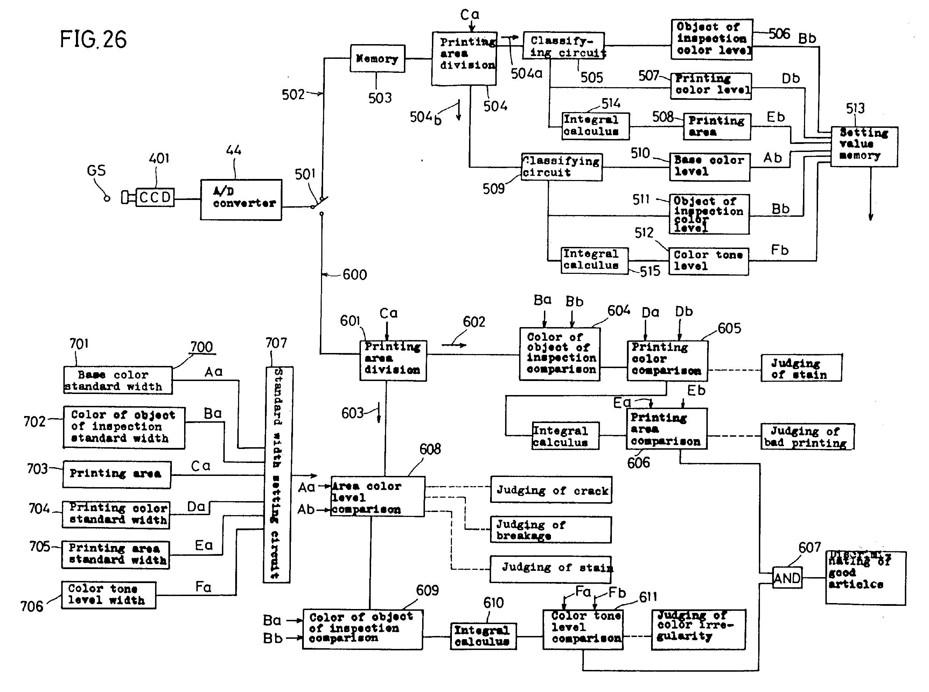

In order to process so that the image signal of the standard article Gs is subjected to A/D conversion, after which the memorized signal is taken out from said memory circuit, and the A/D converted signal of the tablet is compared as a subject to be inspected, each image received part is classified, which is compared by the comparison circuit to judge the acceptability or not. This procedure will be illustrated by the embodiment shown in Fig. 26.

Firstly, the image signal from the TV camera against the standard article Gs is digitally convented by the A/D converter 44, and is inputted to the memory circuit 502 by means of the selection switch 501. In this case, the image signal may be inputted to the memory circuit 502 in an analog state, but the use of a digital form is preferable because of the simplicity for memorizing, calculating, and comparing operations.

The signal inputted to the above memory circuit 502 is memorized for some duration by means of the memorizing means 503, and applied to the printing area classification circuit 504. By means of this printing area classification circuit, the signal is classified into a printing area signal 504a and an outer peripheral signal 504b. The printing area signal 504a is further classified into an inspection subject color level identifying circuit 506, a printing color level identifying circuit 507, and a printing area identifying circuit 508, in the classifying circuit 505. On the other hand, the outer peripheral signal 504b is classified into a base color level identifying circuit 510, an inspection subject color level identifying circuit 511, and a color tone level identifying circuit 512, by the classifying circuit 509.

With regard to the above inspection subject color level identifying circuits 506 and 511, the printing portion and the outer peripheral portion have the same color in the present embodiment as described, and depending upon case, one of the inspection subject color level identifying circuit 506 may be omitted. In any case, the color level is variable by the luminosity to the subject to be inspected, distance between the subject and the TV camera 401, etc., and the signal is applied as Bb to the standard memory circuit 513 to have it memorize.

The printing color level identifying circuit 507 is to apply its output signal Db to the standard value memory circuit 513 to have it memorize.

The printing area identifying circuit 508 is made by integrating the total area of the printed letters, design, etc., i.e., the printing color level in the scanning line, by the integration circuit 514, and its output signal Db is applied to the standard value memory circuit 513 to have it memorize.

The base color level identifying circuit 510 is a circuit for identifying the color level of the above-mentioned base, i.e., belt conveyor for carrying the subject to be inspected, suction drum, etc. Its output signal Ab is applied to the standard value memory circuit 513 to have it memorize.

The color tone identifying circuit 512 is to identify the unevenness of color tone of the subject to be inspected. When there is an unevenness or contamination in the color tone, disturbance is produced to the image wave form. This color tone level is obtainable by integrating the above inspection subject color level by the integration circuit 515. Its output signal Fb is similarly applied to the standard value memory circuit 513 to have it memorize.

In making measurement of the tablet, comparison is made with the value memorized in the above memory circuit 513. In this case, it is necessary to set the allowance beforehand. The numeral 700 shows a circuit for setting the allowance, i.e., the standard width setting circuit. In the drawing, 701 is a standard width setting means for base color. Its output signal Aa is applied to the standard width memory circuit 707 to have it memorize. Similarly, 702 is a means for setting color standard width for the subject to be inspected, 703 is a printing area setting means, 705 is a standard width setting means for printing area, and 706 is a color tone level width setting means. The respective output signals Ba, Ca, Da, Ea, and Fa are to be applied to the standard width memory circuit 707 to have them memorized.

Then, in measuring the tablet, with the photographing conditions for the subject to be inspected set to be the same as those of the standard article, the selection switch 501 is changed to the side of the selection circuit 600. The selection circuit 600 is connected with the printing area classification circuit 601. By means of this classification circuit 601, classification is made between the printing area signal 602 and the outer peripheral portion signal 603.

The printing area signal 602 is applied to the inspection subject color level comparison circuit 604, wherein the inspection subject color level standard value signal Bb from the standard value memory circuit 513 and the inspection subject color standard width signal Ba from the standard width memory circuit 707 are compared, and judgments are made on contamination, existence of print or not, etc. In case of the acceptable article, an operation for comparison is made at the succeeding printing color level comparison circuit 605. To this circuit 605, the printing color level standard value Db and the printing color standard width signal Da are applied from the standard value memory circuit 513 and from the standard width memory circuit 707, respectively, and when judgment has been made that there is a print, the printing color level signal is integrated to compute the printed area and the value is sent to the printing area comparison circuit 606. To this comparison circuit 606, the printing area standard value signal Eb and the printing area standard width signal Ea are applied in the same manner as above, and the acceptability or not of the print is judged according to the existence or not of the printed area within the specified standard width. In case of the acceptable article, the signal is sent to the succeeding AND circuit 607.

The aforedescribed outer peripheral part signal 608 is applied to the area color level comparison circuit 608. To this comparison circuit 608 there are applied the base color level standard value signal Ab and the base color standard width signal Aa. By these signals, the color level of the subject to be inspected is compared, and measurements are made on the decrease of the standard level value of the color of the subject to be inspected attributed to half-cracking and contamination, etc. In case of the acceptable subject, the signal is applied to the succeeding inspection subject color comparison circuit 609 and comparison is made with the inspection subject color standard value Bb and the inspection subject color standard width Ba, and the inspection subject color level within the prescribed range is integrated by the integration circuit 610 and applied to the color tone level comparison circuit 611. To this comparison circuit 611, the color tone level standard value signal Fb and the color tone level standard width signal Fa are applied, by which the unevenness of the color tone is judged.

In case of the acceptable article, the signal is transmitted to the above AND circuit 607, and when it is applied to said AND circuit 607 together with the signal from the foregoing printing area comparison circuit 606, the inspection subject is judged as acceptable, and sent out to the subsequent process. When it is judged as defective in the above comparison circuit, it is discharged outside by a suitable means.

The above measurements are sequentially effected on both the surface and the reverse surface of the tablet. Further, there may be cases where the subjective tablet has different shapes between the surface and the reverse surface, and yet it is supplied not always constantly as to its surface and the reverse surface, i.e., there may be a case where supply is made with either the surface or the reverse surface turned upward. Even in such a case, inspection requires to be made without causing any erroneous action.

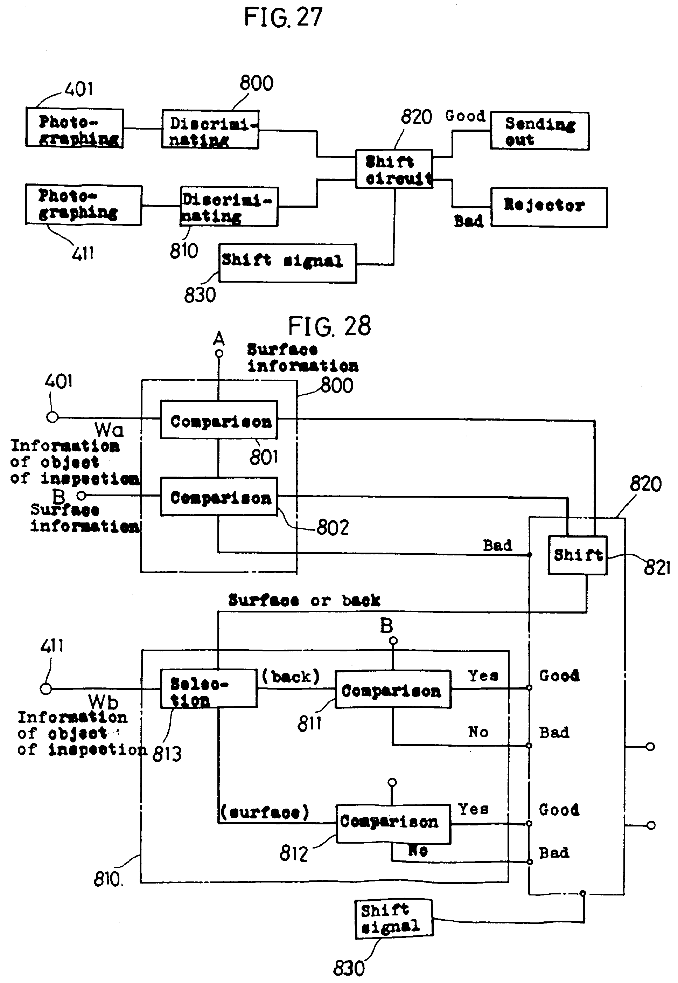

When the tablet is adsorbed by the second adsorption drum and transmitted, a surface inspection is made with the first TV camera, and the result of judgment is shifted by the shift circuit. Then, the tablet is transmitted to the third adsorption drum by reversing its surface. At the time of the transmission to the third drum by adsorption, acceptability or not of the tablet is judged in combination with the inspected judgment result. The principle illustration and the block illustration are shown in Fig. 27 and Fig. 28, respectively. Then, explanation will be given on Fig. 27 and Fig. 28.

Firstly, when the tablet W as an article to be inspected on the first adsorption drum 22 has reached the photographing position of the TV camera 401, by the flashing of the stroboscopic flashlight, one surface of the tablet is photographed by said TV camera, and the inspection subject information Wa is applied to the first comparison circuit 801 of the identifying circuit 800. To the first comparison circuit 801, the surface information A is applied, and the inspection subject information Wa is compared with the surface information A. This surface information A is, as described above, the received light amount (with allowance defined) for the standard article provided with a mark as described above.

If in this first comparison circuit the inspection subject information Wa is in the allowable range (YES), it is judged that the article to be inspected W is acceptable and that the photographed surface (upper surface) is the surface (marked surface), and the information is memorized in the shift circuit 820.

If the judgment is made as outside the range (NO) in the first comparison circuit 801, the inspection subject information Wa is applied to the second comparison circuit 802. To this comparison circuit 802, the reverse surface information B is applied. This reverse surface information B is the light receiving amount (similarly provided with allowance) to the reverse surface of the standard article which is either not stamped with any mark or stamped with other mark, as described above. The inspection subject information Wa is compared with this reverse surface information B, and when it comes within the allowance, the article to be inspected W is judged as an acceptable article and that the photographed surface (upper surface) is the reverse surface, and said information is memorized in the shift circuit 820.

If the judgment is made as outside the range (NO), the article is defective, and the information is memorized in the shift circuit 820 as a defective article.

On the shift circuit 820, a shift signal is impressed from the shift signal generating means 830 which is operated in connection with the adsorption drums 22, 23 or the two stroboscopic flashlamps which flash synchronously.

The shift circuit 820 contains a shift means 821. This shift means 821 receives from the first identification circuit 800 an information signal to the effect that the acceptability was for the surface or for the reverse surface and this information signal is impressed on the selection circuit 813 of the second identification circuit 810 at the next camera identification time (4 shifts).

The second identification circuit 810 firstly impresses the inspection subject signal Wb by the second TV camera 411 to the selection circuit 813. In this circuit 813, the signal is compared with the acceptable article signal of the first identification circuit 800. However, this selection circuit 813 is applied to the first comparison circuit 811 so as to compare the inspection subject information Wb with the reverse surface information B when the signal from the shift means 821 is the surface signal, and to the second comparison circuit 812 so as to compare the inspection subject information Wb with the surface information A when the signal from the shift means 821 is the reverse surface signal. There are applied the reverse surface information B to the first comparison circuit 811 and the surface information A to the second comparison circuit 812, respectively, together with the allowances. The comparison procedures in these comparison circuits 811 and 812 are the same as those of the comparison circuits 801 and 802 in the first identification circuit 800. The article which has been judged as coming within the range of allowance in these comparison circuits 811 and 812 is judged as acceptable, and one which comes outside the range as defective, and the information is so memorized in the shift circuit 820. When the article is judged as defective in the above first and the second identification circuits 800 and 810, the shift circuit 820 actuates the expelling circuit when after the prescribed shift (2 shifts in the illustrated embodiment) the article to be inspected W reaches the position opposite to the chute, releases the adsorbing means, or actuates a suitable taking out means to discharge the article to be inspected W on the discharge chute.

The article to be inspected remaining on the second adsorption drum 23 is an acceptable article. When it reaches the position opposite to the delivery chute, the delivery circuit is actuated, and the adsorption means is released, or alternatively a suitable taking out means is actuated to discharge the article to be inspected W on the delivery chute. In other words, in the first adsorption drum, even whichever surface of the article to be inspected W is adsorbed as the upper surface (surface to be measured), the adsorbed surface is memorized, and the memorized signal is caused to shift at the time of the measurement in the second adsorption drum 23 and the two results of measurements are compared with each other. Accordingly, this system does not produce any erroneous action in respect to the judgment on acceptability or not of the article.

In case of the article having been judged as defective on the first adsorption drum 22, the article is transmitted as such to the second adsorption drum, and on attainment of the specified number of shifts it is to be discharged. Therefore, the discharge operation is simplified.

In the foregoing description, explanation has been made on the case of inspecting the surface and the reverse surface of the tablet. However, it is possible to make inspection by photographing the outer peripheral side of the tablet simultaneously with the surface or the reverse surface thereof by the use of a mirror, a prism, or an optical fiber.

## Claims

1. A machine for inspecting the outer appearance of tablets or the like, said machine comprising feeding means (A, B) to send out said tablets or the like in order, conveying means (C) to convey said tablets or the like for inspection of their outer surface, inspecting means (D), incorporated in said conveying means to inspect photoelectrically the outer surface of said tablets, said inspecting means comprising a TV camera for taking still pictures of the tablets or the like in conjunction with a strobo lamp which flashes in concert with the conveying of said tablets or the like, and discharging means (E) to take out good articles and defective articles selectively after inspection, said objects being inspected for good or bad on the basis of their shape, marking or printing,
said machine being characterised in that said inspecting means (D) comprises an A/D converter connected to said TV camera;
a signal dividing means which separates the picture signals taken by the TV camera into a picture signal representing the area of the tablet containing printed information (504a) and a picture signal representing the area peripheral to the area of the tablet containing printed information (504b);
a first signal classifying means (505) which selectively extracts a signal (Bb) representative of the colour of the tablet to be inspected, a signal (Db) representative of the colour of the printed area of the tablet, and a signal (Eb) obtained by integrating said signal (Db) along each scanning line using an integrator circuit (514);
a second signal classifying means (509) which selectively extracts a signal (Ab) representative of the background colour, a signal (Bb) representative of the colour of the tablet to be inspected, and a signal (Fb) obtained by integrating said signal (Bb) with another integrator circuit (515);
memories (513) which store the signals extracted by the classifying means as standard reference signals of the tablet or the like to be inspected; and
a comparator which compares corresponding classified picture signals taken by the TV camera with the previously stored signals in the memories.

2. A machine as claimed in claim 1, further comprising means for irradiating light of different wavelengths upon the surface of the tablets or the like from at least two different directions, wherein the surface is viewed by the camera on the basis of light received, and wherein only the shadow parts corresponding to the respective wavelengths are analysed.

3. A machine as claimed in claim 2, wherein the wavelength of light irradiated from different directions is a fixed wavelength designated beforehand.

4. A method of inspecting the outer appearance of tablets or the like, said method comprising:
previously taking pictures of a standard tablet or the like by means of a TV camera;
converting the picture signals into digital signals by means of an A/D converter;
separating said picture signals into a first picture signal (504a) representing the area of the tablet containing printed information and a second picture signal (504b) representing the area peripheral to the area of the tablet containing the printed information;
dividing said first picture signal (504a) into a signal (Bb) representative of the colour of the tablet to be inspected, a signal (Db) representative of the colour of the printed area of the tablet, and a signal (Eb) obtained by integrating the signal (Db) along each scanning line by an integrator circuit (514);
simultaneously dividing said second picture signal into a signal (Ab) representative of the background colour, a signal (Bb) representative of the colour of the tablet to be inspected, if required, and a signal (Fb) obtained by integrating said signal (Bb) with an integrator circuit (515);
storing each of the above identified signals as the standard tablet to be inspected;
thence taking pictures of the tablets or the like to be inspected by the same TV camera under the same conditions as the standard tablet; and
comparing the corresponding signals of each in order to enable a judgment to be made with a predetermined tolerance whether the object is good or bad.

5. A method as claimed in claim 4, wherein the photographing time of each TV camera is delayed by one field in the case where both the surface and the back of the tablets or the like are to be photographed by the TV camera.

6. A method as claimed in claim 4 wherein, after the standard tablet or the like has been photographed by the TV camera, a standard image signal output from the camera is A/D converted and is inputted to a memory circuit, wherein after a tablet or the like to be inspected is photographed by the TV camera, the divided picture signals are A/D converted, and wherein said latter picture signals and the standard image signals from the memory circuit are called to the comparator synchronously and are compared in real time in order to make said judgment.

7. A method as claimed in claim 4, wherein tablets or the like are conveyed as they are adsorbed by adsorption drums having concentric surfaces and different diameters at their outer circumferential surfaces, said adsorption drums being arranged in such a fashion that they oppose each other such that, when objects are conveyed in plural rows in the running direction of each drum, the surface, the back and the outer peripheral surface of the tablets or the like are photographed by a plurality of TV cameras and wherein adsorption holes on the drum are tapered so as to adsorb and fix the centre of said tablets or the like.

## Patentansprüche

1. Vorrichtung zur Untersuchung des äußeren Aussehens von Tabletten oder dergl., wobei die Vorrichtung aufweist: eine Zuführungseinrichtung (A, B), um die Tabletten oder dergl. der Reihe nach auszugeben, eine Transporteinrichtung (C) zum Transport der Tabletten oder dergl. für die Untersuchung ihrer äußeren Oberfläche, eine in der Transporteinrichtung eingebaute Untersuchungseinrichtung (D), um die äußere Fläche der Tabletten photoelektrisch zu untersuchen, wobei die Untersuchungseinrichtung eine TV-Kamera zur Aufnahme stehender Bilder der Tabletten oder dergl. in Verbindung mit einer Stroboskoplampe aufweist, welche synchron zum Transport der Tabletten oder dergl. blitzt, und eine Entladeeinrichtung (E), um gute Artikel und schlechte Artikel selektiv nach der Untersuchung zu entnehmen, wobei die Objekte auf der Basis ihrer Form, Markierung oder Bedruckung darauf hin untersucht werden, ob sie gut oder schlecht sind,
wobei die Vorrichtung dadurch gekennzeichnet ist, daß die Untersuchungseinrichtung (D) aufweist:
einen mit der TV-Kamera verbundenen A/D-Wandler;
eine Signalaufteileinrichtung, welche die von der TV-Kamera aufgenommenen Bildsignale in ein Bildsignal (504a), das die Fläche der Tablette repräsentiert, welche die gedruckte Information enthält, und in ein Bildsignal (504b) aufteilt, welches die Fläche repräsentiert, die um die Fläche der Tablette herum liegt, welche die gedruckte Information enthält;
eine erste Signalklassifizierungseinrichtung (505), welche selektiv ein Signal (Bb), das für die Farbe der zu untersuchenden Tablette repräsentativ ist, ein Signal (Db). das für die Farbe des gedruckten Bereichs der Tablette repräsentativ ist, und ein Signal (Eb), das durch Integration des Signales (Db) entlang jeder Abtastzeile unter Verwendung einer Integratorschaltung (514) erhalten wird, herauszieht;
eine zweite Signalklassifizierungseinrichtung (509), welche selektiv ein Signal (Ab), das repräsentativ für die Hintergrundfarbe ist, ein Signal (Bb), das für die Farbe der zu untersuchenden Tablette repräsentativ ist, und ein Signal (Fb), das durch Integration des Signales (Bb) einer anderen Integratorschaltung (515) erhalten wird, herauszieht;
Speicher (513), welche die von der Klassifizierungseinrichtung herausgezogenen Signale als Standardreferenzsignale der zu untersuchenden Tablette oder dergl. speichern;
und einen Komparator, welcher entsprechende klassifizierte, von der TV-Kamera aufgenommene Bildsignale mit den zuvor gespeicherten Signalen in den Speichern vergleicht.

2. Vorrichtung nach Anspruch 1, welche ferner eine Einrichtung zum Aufstrahlen von Licht verschiedener Wellenlängen auf die Oberfläche der Tabletten oder dergl. aus mindestens zwei verschiedenen Richtungen aufweist, bei der die Oberfläche von der Kamera auf der Basis des empfangenen Lichts betrachtet wird, und bei der nur die Schattenbereiche, die den jeweiligen Wellenlängen entsprechen, analysiert werden.

3. Vorrichtung nach Anspruch 2, bei der die Wellenlänge des von verschiedenen Richtungen aus aufgestrahlten Lichts, eine feste im Voraus festgelegte Wellenlänge ist.

4. Verfahren zur Untersuchung des äußeren Aussehens von Tabletten und dergl., wobei das Verfahren aufweist:
Vorabaufnehmen von Bildern einer Standardtablette oder dergl. mittels einer TV-Kamera;
Umwandeln der Bildsignale in digitale Signale mittels eines A/D-Wandlers;
Auftrennen der Bildsignale in ein erstes Bildsignal (504a), welches die Fläche der Tablette repräsentiert, welche die gedruckte Informationen enthält, und in ein zweites Bildsignal, das die Fläche um die Fläche der Tablette herum repräsentiert, welche die gedruckte Information enthält;
Aufteilen des ersten Bildsignals (504a) in ein Signal (Bb), das für die Farbe der zu untersuchenden Tablette repräsentativ ist, in ein Signal (Db), das für die Farbe des gedruckten Bereichs der Tablette repräsentativ ist, und in ein Signal (Eb), das durch Integration des Signales (Db) entlang jeder Abtastzeile unter Verwendung einer Integratorschaltung (514) erhalten wird;
gleichzeitiges Aufteilen des zweiten Bildsignals in ein Signal (Ab), das repräsentativ für die Hintergrundfarbe ist, in ein Signal (Bb), das für die Farbe der zu untersuchenden Tablette repräsentativ ist, falls erforderlich und in ein Signal (Fb), das durch Integration des Signales (Bb) mit einer Integratorschaltung (515) erhalten wird;
Speichern jedes der vorstehenden identifizierten Signale als zu untersuchende Standardtablette;
dann Aufnehmen der zu untersuchenden Tabletten oder dergl. mittels derselben TV-Kamera unter den gleichen Bedingungen wie für die Standardtablette; und
Vergleichen der entsprechenden Signale jeder Tablette in Reihenfolge, um zu ermöglichen, daß eine Beurteilung mit einer vorgegebenen Toleranz ausgeführt wird, ob das Objekt gut oder schlecht ist.

5. Verfahren nach Anspruch 4, bei dem die Photographiezeit jeder TV-Kamera um ein Halbbild in dem Falle verzögert wird, bei dem sowohl die Ansichtsseite als auch die Rückseite der Tabletten oder dergl. von der TV-Kamera zu photographieren sind.

6. Verfahren nach Anspruch 4, bei dem, nachdem die Standardtablette oder dergl. von der TV-Kamera photographiert wurde ein von der Kamera ausgegebenes Signal A/D-gewandelt wird und in eine Speicherschaltung eingegeben wird, bei dem nachdem eine zu untersuchende Tablette oder dergl. von der TV-Kamera photographiert wurde, die aufgeteilten Signale A/D-gewandelt werden und bei dem die letzteren Bildsignale und die Standardbildsignale aus der Speicherschaltung synchron zur der Komparatorschaltung gerufen werden und in Echtzeit verglichen werden, um die Beurteilung auszuführen.

7. Verfahren nach Anspruch 4, bei dem die Tabletten oder dergl. transportiert werden, indem sie von Adsorptionstrommeln mit konzentrischen Oberflächen und verschiedenen Durchmessern an ihren Außenumfangsflächen transportiert werden, wobei die Adsorptionstrommeln in einer Art angeordnet sind, daß sie einander in der Art gegenüberliegen, daß, wenn Objekte in mehreren Reihen in der Laufrichtung jeder Trommel transportiert werden, die Ansichtsseite, die Rückseite und die Außenumfangsfläche der Tabletten oder dergl. durch mehrere TV-Kameras photographiert werden, und bei dem die Adsorptionslöcher auf der Trommel konisch geformt sind, so daß sie den Mittelpunkt der Tabletten und dergl. adsorbieren und fixieren.

## Revendications

1. Machine pour inspecter l'aspect extérieur de comprimés ou analogues, ladite machine comprenant des moyens d'alimentation (A, B) servant à délivrer lesdits comprimés ou analogues d'une manière ordonnée, des moyens convoyeurs (C) pour déplacer lesdits comprimés ou analogues pour l'inspection de leur surface extérieure, des moyens d'inspection (D) incorporés dans lesdits moyens convoyeurs pour inspecter par voie photoélectrique la surface extérieure desdits comprimés, lesdits moyens d'inspection comprenant une caméra de télévision servant à enregistrer des images fixes des comprimés ou analogues en liaison avec une lampe stroboscopique, qui délivre des éclair conjointement avec le déplacement desdits comprimés ou analogues, et des moyens d'évacuation (E) pour évacuer des bons articles et des articles défectueux de façon sélective après l'inspection, lesdits objets étant inspectés pour déterminer s'ils sont bons ou mauvais, sur la base de leur forme, de leur marquage ou de leur impression,
ladite machine étant caractérisée en ce que lesdits moyens d'inspection (D) comprennent un convertisseur analogique/numérique raccordé à ladite caméra de télévision;
des moyens diviseurs de signaux, qui séparent les signaux d'image enregistrés par la caméra de télévision en un signal d'image représentant la zone du comprimé contenant une information imprimée (504a) et un signal d'image représentant la zone qui est périphérique par rapport à la zone du comprimé contenant une information imprimée (504b);
des premiers moyens (505) de classement de signaux, qui extraient de façon sélective un signal (Bb) représentatif de la couleur du comprimé devant être inspecté, un signal (Db) représentatif de la couleur de la zone imprimée du comprimé, et un signal (Eb) obtenu par intégration dudit signal (Db) le long de chaque ligne de balayage moyennant l'utilisation d'un circuit intégrateur (514);
des seconds moyens (509) de classement de signaux, qui extraient de façon sélective un signal (Ab) représentatif de la couleur du fond, un signal (Bb) représentatif de la couleur du comprimé devant être inspecté, et un signal (Fb) obtenu par intégration dudit signal (Bd) avec un autre circuit intégrateur (515);
des mémoires (513), qui mémorisent les signaux extraits par les moyens de classement en tant que signaux de référence standards du comprimé ou analogue devant être inspecté; et
un comparateur, qui compare des signaux d'image classés de façon correspondante, enregistrés par la caméra de télévision, ainsi que les signaux mémorisés antérieurement, dans les mémoires.

2. Machine selon la revendication 1, comprenant en outre des moyens pour projeter une lumière ayant des longueurs d'ondes différentes sur la surface des comprimés ou analogues, dans au moins deux directions différentes, la surface étant observée par la caméra sur la base de la lumière reçue, et seules les parties d'ombre correspondant aux longueurs d'onde respectives sont analysées.

3. Machine selon la revendication 2, dans laquelle la longueur d'onde de la lumière émise dans différentes directions est une longueur d'onde fixe désignée préalablement.

4. Procédé pour inspecter l'aspect extérieur de comprimés ou analogues, ledit procédé comprenant :
l'obtention préalable d'images d'un comprimé standard ou analogue au moyen d'une caméra de télévision;
la conversion des signaux d'image en des signaux numériques au moyen d'un convertisseur analogique/numérique;
la séparation desdits signaux d'image en un premier signal d'image (504a) représentant la zone du comprimé contenant une information imprimée, un second signal d'image (504b) représentant la zone qui est située à la périphérie de la zone du comprimé contenant l'information imprimée;
la division dudit signal d'image (504a) en un signal (Bb) représentatif de la couleur du comprimé devant être inspecté, un signal (Db) représentatif de la couleur de la zone imprimée du comprimé, et un signal (Eb) obtenu par intégration du signal (Db) le long de chaque ligne de balayage par un circuit intégrateur (514);
la division simultanée dudit second signal d'image en un signal (Ab) représentatif de la couleur du fond, un signal (Bb) représentatif de la couleur du comprimé devant être inspecté, si cela est nécessaire, et un signal (Fb) obtenu par intégration dudit signal (Bb) avec un circuit intégrateur (515);
mémorisation de chacun des signaux indiqués précédemment en tant que comprimé standard devant être inspecté;
par conséquent, enregistrement d'images des comprimés ou analogues devant être inspectés, par la même caméra de télévision, dans les mêmes conditions que pour le comprimé standard; et
comparaison des signaux correspondants des différents comprimés de manière à permettre une évaluation, avec une tolérance prédéterminée, du fait que l'objet est bon ou mauvais.

5. Procédé selon la revendication 4, selon lequel l'instant d'enregistrement de chaque caméra de télévision est retardé d'une trame dans le cas où à la fois les images de la surface avant et de l'arrière des comprimés ou analogues doivent être enregistrées par la caméra de télévision.

6. Procédé selon la revendication 4, selon lequel, une fois que l'image du comprimé standard ou analogue a été enregistrée par la caméra de télévision, un signal d'image standard délivré par la caméra est soumis à une conversion analogique/numérique et est envoyé à un circuit de mémoire, auquel cas, après que l'image d'un comprimé ou analogue devant être inspecté est enregistrée par la caméra de télévision, les signaux d'image divisés sont soumis à une conversion analogique/numérique, et selon lequel lesdits signaux d'image indiqués en dernier lieu et les signaux d'image standards délivrés par le circuit de mémoire sont envoyés de façon synchrone au comparateur et sont comparés en temps réel pour l'exécution de ladite évaluation.

7. Procédé selon la revendication 4, selon lequel des comprimés ou analogues sont transférés tels qu'ils sont collectés par des tambours de collecte comportant des surfaces concentriques et possédant des diamètres différents au niveau de leurs surfaces circonférentielles extérieures, lesdits tambours de collecte étant disposés de manière à être situés en vis-à-vis les uns des autres de telle sorte que, lorsque des objets sont convoyés suivant plusieurs rangées dans la direction de déplacement de chaque tambour, la surface avant, l'arrière et la surface périphérique extérieure des comprimés ou analogues sont enregistrés par une pluralité de caméras de télévision et, selon lequel des trous de collecte ménagés dans le tambour sont réalisés avec une forme rétrécie de manière à recevoir et fixer le centre desdits comprimés ou analogues.
